**Europäisches Patentamt**

**European Patent Office**

**Office européen des brevets**

(11) Veröffentlichungsnummer: **0 406 597 A2**

(12) # EUROPÄISCHE PATENTANMELDUNG

(21) Anmeldenummer: **90111286.2**

(22) Anmeldetag: **15.06.90**

(51) Int. Cl.5: **F16L 21/06**

(30) Priorität: **03.07.89 DE 8908088 U**

(43) Veröffentlichungstag der Anmeldung:
**09.01.91 Patentblatt 91/02**

(84) Benannte Vertragsstaaten:
**AT BE CH DE DK ES FR GB GR IT LI LU NL SE**

(71) Anmelder: **ALLIGATOR VENTILFABRIK GMBH**
**Postfach 1120**
**D-7928 Giengen/Brenz(DE)**

(72) Erfinder: **Bänziger, Fritz**
**Fischergasse 1**
**D-7900 Ulm/Donau(DE)**

(74) Vertreter: **Hiebsch, Gerhard F., Dipl.-Ing. et al**
**Hiebsch & Peege Patentanwälte Postfach**
**464 Erzbergerstrasse 5a 5a**
**D-7700 Singen 1(DE)**

(54) **Rohrkupplung.**

(57) Eine verbesserte Vorrichtung zum Erhöhen der Abziehkräfte einer die Enden (12) miteinander etwa fluchtender Rohre (10) umfassenden Rohrkupplung (14) weist wenigstens zwei in ihr in axialem Abstand angeordnete Aufnahmeräume für jeweils zumindest ein zur Rohrachse hin mit Zahnrippen (30) ausgestattetes und querschnittlich keilförmiges Ringorgan auf, das in seinem sich von den Rohrenden (12) weg verjüngenden, als Radialnut (20) ausgebildeten Aufnahmeraum mit axialem Spiel angeordnet und von zumindest zwei Schneidringsektoren (22) gebildet ist. Zudem soll der Schneidringsektor (22) dem nach außen geneigten Nutentiefsten 924) sowie der inneren Wand (25) der Radialnut (20) unmittelbar anliegen und mit der anderen etwa parallelen Außenwand (25) einen Zwischenraum begrenzen.

Fig.3

EP 0 406 597 A2

## ROHRKUPPLUNG

Die Erfindung betrifft eine die Enden miteinander etwa fluchtender Rohre umfassende Rohrkupplung.

Ziel dieser Erfindung ist es, diese Rohrkupplung so auszugestalten, daß der Widerstand gegen an den Rohren angreifende Zugkräfte, welche die Rohre voneinander zu trennen trachten, erhöht wird.

Zur Lösung dieser Aufgabe führt eine Rohrkupplung mit wenigstens zwei in ihr in axialem Abstand angeordneten, in ihrer Lage insbesondere von einer zwischen den Rohrenden verlaufenden Symmetrieebene bestimmten Aufnahmeräumen für jeweils zumindest ein zur Rohrachse hin mit Zahnrippen ausgestattetes und querschnittlich keilförmiges Ringorgan, das in seinem sich von den Rohrenden weg verjüngenden, als Radialnut ausgebildeten Aufnahmeraum mit axialem Spiel angeordnet sowie von zumindest zwei Schneidringsektoren gebildet wird.

Dabei hat es sich als besonders günstig erwiesen, mehrere Schneidringsektoren unter Bildung von Radialspalten innerhalb der Radialnut unterzubringen und dadurch das Einpassen der Rohre in die Rohrkupplung zu vereinfachen.

Nach einem weiteren Merkmal der Erfindung liegt der Schneidringsektor -- entsprechend alle den Schneidring bildenden Schneidringsektoren -- dem geneigten Nutentiefsten sowie der inneren, also zu den Rohrenden gerichteten Wand der Radialnut unmittelbar an, wohingegen er mit der anderen etwa parallelen Außenwand der Radialnut einen Zwischenraum begrenzt. Dank dieser Maßgabe entsteht beim Zug an den Rohrenden eine die Kupplung anziehende Keilwirkung.

Vorteilhafterweise besitzt das Profil der Zahnrippe/n des Schneidringsektors eine zum Rohrende hin gerichtete sowie zu diesem parallele Zahnfront - ebenfalls eine Maßnahme zur Erhöhung der Haltekräfte der Rohrkupplung.

Es hat sich in der Praxis gezeigt, daß es ausreicht, den Schneidringsektor mit nur zwei Zahnrippen zu versehen, welche an den Außenseiten des Schneidringsektors verlaufen.

Weitere Voreile, Merkmale und Einzelheiten der Erfindung ergeben sich aus der nachfolgenden Beschreibung eines bevorzugten Ausführungsbeispieles sowie anhand der Zeichnung; diese zeigt in

Fig. 1: die Stirnansicht eines Rohres mit Schneidringsektoren in einer aufgesetzten Rohrkupplung;

Fig. 2: den Schnitt durch Fig. 1 nach deren Linie II-II;

Fig. 3: einen vergrößerten Ausschnitt aus Fig. 2;

Fig. 4: Schneidringsektoren in Seitenansicht;

Fig. 5: den Schnitt durch Fig. 4 nach deren Linie V - V.

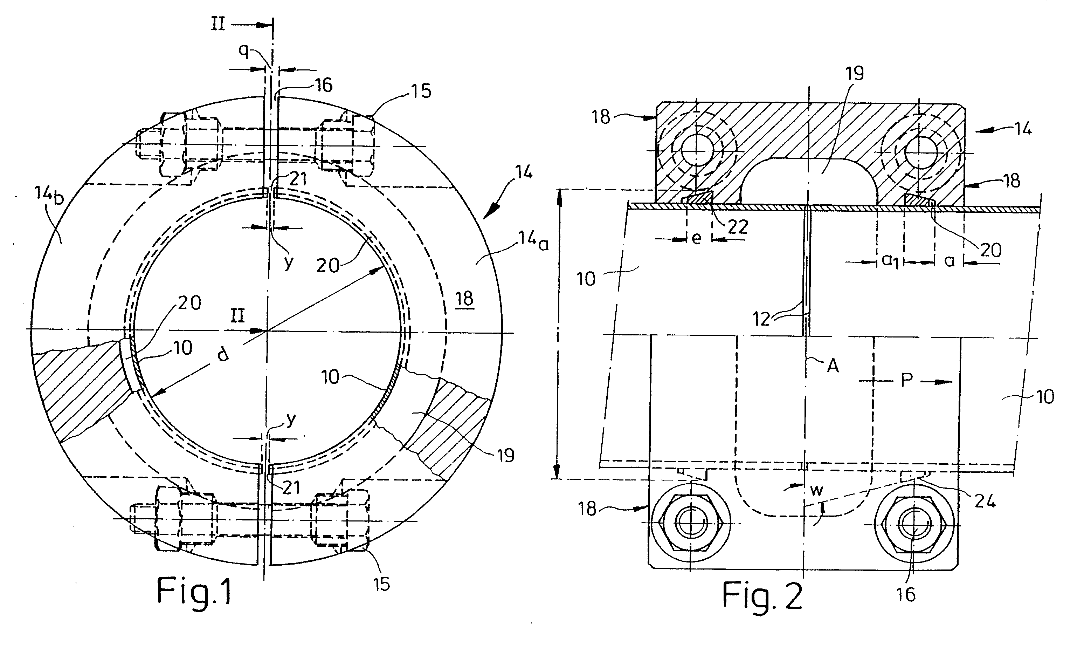

Zwei Rohre 10 eines inneren Durchmessers d von beispielsweise 85 mm stoßen mit ihren Rohrkanten 12 aneinander und werden durch eine Rohrkupplung 14 miteinander verspannt. Diese weist zwei Halbschalen $14_a$ und $14_b$ auf, die durch Schrauben 15 miteinander verbunden sind. Ein in Fig. 1 erkennbarer Spalt der Breite q zwischen den Halbschalen $14_a$, $14_b$ ist mit 16 bezeichnet.

Die Halbschalen $14_a$, $14_b$ sind in einem Abstand a von ihren Flankenflächen 18 einerseits und in einem Abstand $a_1$ von einem Schaleninnenraum 19 anderseits mit Aufnahmenuten 20 einer Breite b von etwa 12 mm für Schneidringsektoren 22 versehen. Diese begrenzen zwischen sich Ringspalte 21 der Weite y.

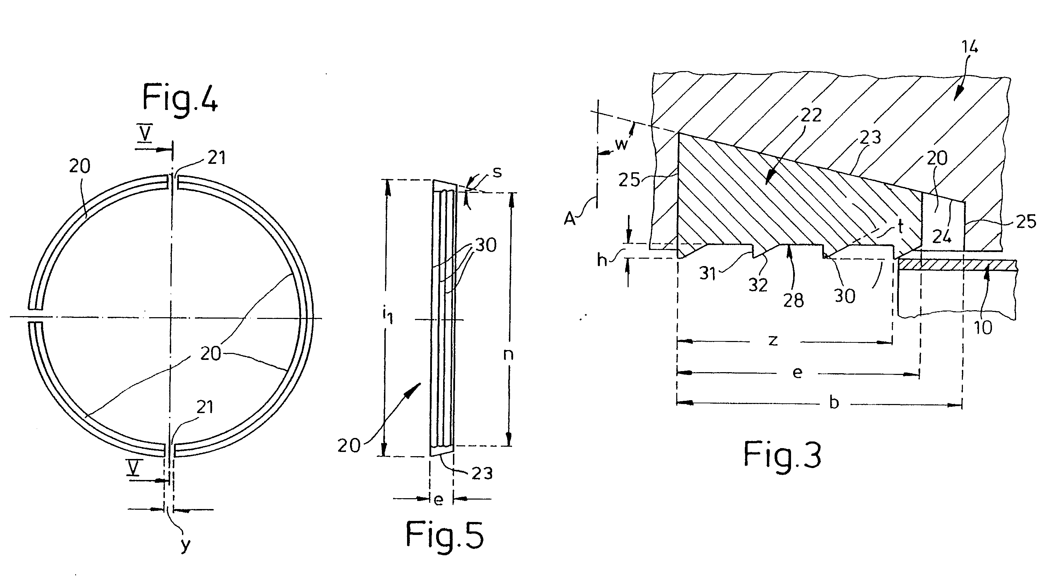

Das Nutentiefste 24 der Aufnahmenut 20 eines äußeren Nutdurchmessers i ist -- wie vor allem Fig. 3 verdeutlicht -- in einem Winkel w von beispielsweise 75° zur Schalenachse A hin geneigt, die Nutwände 25 verlaufen radial. Da die Breite e des Schneidringsektors 22 mit etwa 8 mm geringer ist als die Nutbreite b, ist der Schneidringsektor 22 bewegbar gelagert, und es entsteht bei Zug (Pfeil P) am Rohr 10 eine Keilwirkung.

Der sich querschnittlich keilförmig in Pfeilrichtung P verjüngende Schneidringsektor 22 ist an seiner Innenseite mit umlaufenden Zahnrippen 30 der Höhe h von 0,45 mm ausgestattet. Die radiale Zahnfront 31 der Zahnrippen 30 weist zur Schalenachse A hin, die Neigung t der schrägen Zahnkante 32 beträgt etwa 30°. Bei besonderen Ausführungen sind nur zwei Zahnrippen 30 vorhanden, nämlich an den Außenkanten des Schneidringsektors 22 in einem Zahnabstand z.

Der Schneidringsektor 22 ist gemäß Fig. 4 unter Bildung der Ring- oder Radialspalte 21 einer Breite y durch die anderen Schneidringsektoren 22 zum Ring ergänzt, das Beispiel der Fig. 5 zeigt eine von zwei Schneidringhalbringen 22 gebildete Einlage.

Der Werkstoff für einen Schneidringsektor NW 80/84 ist ECM 16 Mn Cr 5. Im gewählten Ausführungsbeispiel ist der Außendurchmesser $i_1$ bei einem Neigungswinkel s des Schneidringrückens 23 von 24° hier 96,3 mm, wohingegen der Innendurchmesser n dann 84,8 mm beträgt.

## Ansprüche

1. Vorrichtung zum Erhöhen der Abziehkräfte einer die Enden (12) miteinander etwa fluchtender Rohre (10) umfassenden Rohrkupplung (14) mit wenigstens zwei in ihr in axialem Abstand angeordneten, insbesondere von einer zwischen den Rohrenden (12) verlaufenden Symmetrieebene (A) bestimmten Aufnahmeräumen für jeweils zumindest ein zur Rohrachse hin mit Zahnrippen (30) ausgestattetes und querschnittlich keilförmiges Ringorgan, das in seinem sich von den Rohrenden (12) weg verjüngenden, als Radialnut (20) ausgebildeten Aufnahmeraum mit axialem Spiel angeordnet und von zumindest zwei Schneidringsektoren (22) gebildet ist.

2. Rohrkupplung nach Anspruch 1, dadurch gekennzeichnet, daß der Schneidringsektor (22) dem nach außen geneigten Nutentiefsten (24) sowie der inneren Wand (25) der Radialnut (20) unmittelbar anliegt und mit der anderen etwa parallelen Außenwand (25) einen Zwischenraum begrenzt.

3. Rohrkupplung nach Anspruch 1 oder 2, dadurch gekennzeichnet, daß der Schneidringsektor (22) mit dem in der Radialnut (20) benachbarten Schneidringsektor (22) einen Radialspalt (21) begrenzt.

4. Rohrkupplung nach einem der Ansprüche 1 bis 3, dadurch gekennzeichnet, daß das Profil der Zahnrippe (30) eine zum Rohrende (12) weisende sowie zu ihm parallele Zahnfrontfläche (31) besitzt.

5. Rohrkupplung nach einem der Ansprüche 1 bis 4, gekennzeichnet durch jeweils eine Zahnrippe (30) an den Außenseiten des Schneidringsektors (22).

Fig. 2

Fig.1

Fig.3

Fig.5

Fig.4

5